Europäisches Patentamt

European Patent Office

Office européen des brevets

(19)

(11) EP 1 504 838 A1

(12) EUROPEAN PATENT APPLICATION

(43) Date of publication:
09.02.2005 Bulletin 2005/06

(51) Int Cl.⁷: B23F 21/10

(21) Application number: 04017657.0

(22) Date of filing: 26.07.2004

(84) Designated Contracting States:
AT BE BG CH CY CZ DE DK EE ES FI FR GB GR
HU IE IT LI LU MC NL PL PT RO SE SI SK TR
Designated Extension States:
AL HR LT LV MK

(30) Priority: 04.08.2003 JP 2003285553
12.03.2004 JP 2004071497

(71) Applicant: Harmonic Drive Systems Inc.
Shinagawa-ku, Tokyo 140-0013 (JP)

(72) Inventors:
• Yamazaki, Hiroshi
c/o Harmonic Drive Systems Inc.,
Minamiazumi-gun Nagano-ken, 399-8305 (JP)

• Yoshida, Yoshitaro
c/o Harmonic Drive Systems Inc.
Minamiazumi-gun Nagano-ken, 399-8305 (JP)
• Kiyosawa, Yoshihide
c/o Harmonic Drive Systems Inc
Minamiazumi-gun Nagano-ken, 399-8305 (JP)
• Kishi, Satoshi
Nagano-ken, 381-0083 (JP)

(74) Representative: Klunker . Schmitt-Nilson . Hirsch
Winzererstrasse 106
80797 München (DE)

(54) **Resharpenable pinion type cutter with arbitrary tooth shape**

(57) An axially perpendicular tooth shape profile contour for an internal gear is given as a series of dispersive points, the given series of axially perpendicular cross-sectional tooth shape profile points for the internal gear is interpolated by the Akima method to define the axially perpendicular cross-sectional tooth shape profile which is then defined by a formula whereby the coordinate system has been transformed to a fixed coordinate system that rotates integrally with the pinion type cutter. An envelope of a group of curves represented by the formula is determined, the axially perpendicular cross-sectional cutting edge shape profile of the pinion type cutter is determined by projecting the envelope onto a cone of the rake surface of the pinion type cutter, and the cutting edge shape profile of the pinion type cutter is defined by superposing in the axial direction of the pinion type cutter the axially perpendicular cross-sectional cutting edge shape profile obtained by varying the center distance between the pinion type cutter and the internal gear. It is possible to prevent tooth shape errors in the gear by using the resharpened pinion type cutter.

FIG.2

**Description**

BACKGROUND OF THE INVENTION

1. Field of the Invention

The present invention relates to a pinion type cutter for cutting an internal gear or the like of a wave gear device, and more particularly to a pinion type cutter having a relief surface capable of reproducing a tooth shape profile required for a resultant gear even when the pinion type cutter is resharpened.

2. Description of the Related Art

As a gearing mechanism, there is a wave gear mechanism known by the trade name "Harmonic Drive" owned by the present applicant, and the wave gear mechanism is comprised of three components: a rigid internal gear, a flexible external gear, and a wave generator, enabling a simple reduction gear mechanism with high reduction gear ratio to be realized. Conventionally, involute gearings have been used in the wave gear mechanisms, but currently non-involute, specially shaped gears are adopted in order to improve performance characteristics.

Here, the pinion type cutter is generally used for cutting the internal gear; however, when the pinion type cutter is resharpened, a problem arises that a tooth shape profile required for a resultant gear cannot be reproduced.

SUMMARY OF THE INVENTION

An object of the present invention is to provide a pinion type cutter that can prevent generating tooth shape errors in an obtained gear by using the resharpened pinion type cutter.

In a pinion type cutter of the present invention, a cutting edge shape thereof is a continuum of cutting edge shapes with different radii, capable of cutting a gear that has a required tooth shape profile.

Here, an external peripheral relief surface of the cutting edge can be a conical surface or a surface of revolution. Also, a lateral relief surface of the cutting edge can be a tapered threaded surface.

The present invention is also directed to a method for designing a cutting edge shape profile for the pinion type cutter with the above-described configuration, including steps of:

taking into consideration of a coordinate system when the pinion type cutter having a number of teeth zp is employed to cut and obtain an internal gear with a number of teeth z,

in the coordinate system, giving an axially perpendicular tooth shape profile contour for the internal gear as a series of dispersive points,

in the coordinate system, interpolating the given series of axially perpendicular cross-sectional tooth shape profile points for the internal gear by the Akima method, so that the axially perpendicular cross-sectional tooth shape profile for the internal gear is defined by the following formula where t is a variable representing the profile,

$$
\left.\begin{array}{l}
x = P(t) = P \\
y = Q(t) = Q
\end{array}\right\}
$$

defining the axially perpendicular cross-sectional tooth shape profile by the following formula in which the coordinate system has been transformed to a fixed coordinate system that rotates integrally with the pinion type cutter,

$$
\left.\begin{array}{l}
u = P\cos\left(\frac{1-i}{i}\theta\right) + Q\sin\left(\frac{1-i}{i}\theta\right) - a\cos\left(\frac{\theta}{i}\right) \\
v = -P\sin\left(\frac{1-i}{i}\theta\right) + Q\cos\left(\frac{1-i}{i}\theta\right) + a\sin\left(\frac{\theta}{i}\right)
\end{array}\right\}
$$

where $a = r - r_P$ (center distance between the internal gear and the pinion type cutter)

*r*: radius of a tooth cutting pitch circle of the internal gear
$r_p$: radius of a tooth cutting pitch circle of the pinion type cutter,

obtaining the envelope of a group of curves defined by the above formula with using the following formula

$$\theta = \sin^{-1}\frac{-AC \pm B\sqrt{A^2 + B^2 - C^2}}{A^2 + B^2}$$

where

$$A = -\frac{a}{i}\dot{Q}, \; B = \frac{a}{i}\dot{P}, \; C = -\frac{1-i}{i}(P\dot{P}+Q\dot{Q})$$

$$\dot{P} = \frac{dP}{dt}, \; \dot{Q} = \frac{dQ}{dt},$$

and

determining the axially perpendicular cross-sectional cutting edge shape profile of the pinion type cutter by projecting the envelope onto a cone of a rake surface of the pinion type cutter.

Here, when the following interference discriminant derived from the above formulae is employed, it is found that an interference phenomenon occurs when values Up and Vp are both zero, and that such a region cannot be adopted for the cutting edge shape.

$$\frac{dv}{du} = \frac{\frac{dv}{dt}}{\frac{du}{dt}} = \frac{V_P}{U_P}$$

where

$$U_P = \frac{\partial u}{\partial t} + \frac{\partial u}{\partial \theta}\frac{d\theta}{dt}, \; V_P = \frac{\partial v}{\partial t} + \frac{\partial v}{\partial \theta}\frac{d\theta}{dt}$$

$$\frac{d\theta}{dt} = \dot{\theta} = \frac{\dot{A}\sin\theta + \dot{B}\cos\theta + \dot{C}}{A\cos\theta - B\sin\theta}$$

$$\dot{A} = -\frac{a}{i}\ddot{Q}, \; \dot{B} = \frac{a}{i}\ddot{P}, \; \dot{C} = -\frac{1-i}{i}\left( P\ddot{P}+Q\ddot{Q}+\dot{P}^2+\dot{Q}^2 \right)$$

In the present invention, the cutting edge shape profile of the pinion type cutter is established by varying the center distance *a* between the pinion type cutter and the internal gear, determining with the aid of the interference discriminant a valid region of cutting edge shapes in which the cutting edge shapes are not invalid, and superposing in an axial direction of the pinion type cutter the axially perpendicular cross-sectional cutting edge shape profiles obtained by the formula for defining the envelope in the valid region of cutting edge shapes.

In the pinion type cutter of the present invention, the relief after resharpening has a cutting edge shape that can cut a gear that has a required tooth shape profile. Hence, a tooth shape profile required for a resultant gear can be reproduced with high accuracy even after resharpening.

BRIEF DESCRIPTION OF THE DRAWINGS

FIG. 1 is a perspective view showing a pinion type cutter;
FIG. 2 is a schematic diagram for describing a cutting edge shape profile contour of the pinion type cutter;
FIG. 3 is a diagram showing a coordinate system for a theoretical analysis to determine the cutting edge shape profile contour of the pinion type cutter;

FIG. 4 is a diagram showing a coordinate system for determining the cutting edge shape profile contour of a relief grinding wheel; and

FIG. 5 is a graph showing a computational example of the cutting edge shape profile of the relief grinding wheel.

DESCRIPTION OF THE PREFERRED EMBODIMENTS

A pinion type cutter according to the present invention will be described below with reference to the drawings.

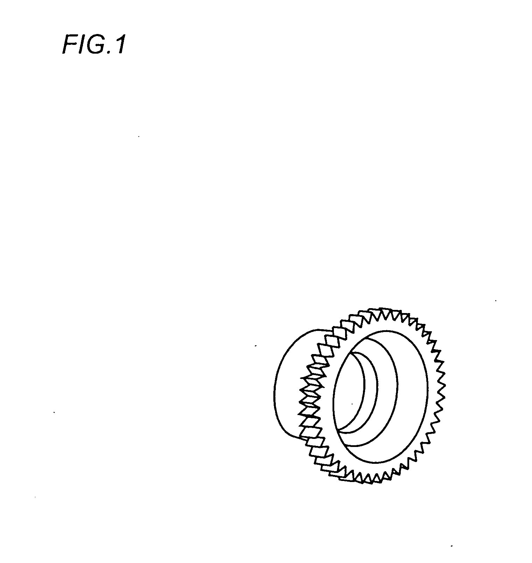

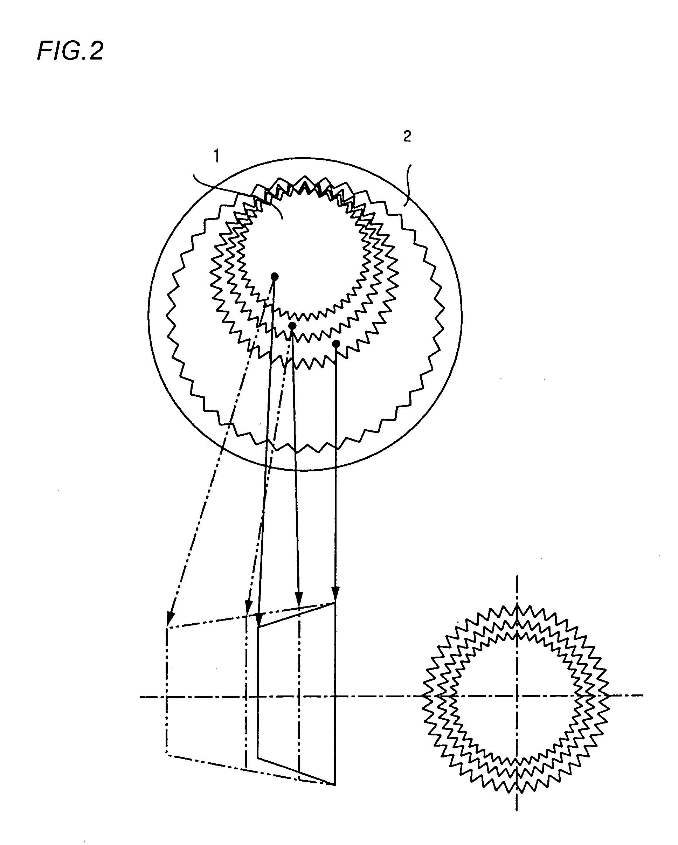

In the present invention, the cutting edge shape of a pinion type cutter is defined by a continuum of pinion type cutter cutting edge shapes with different radii that can correctly cut a cylindrical internal spur gear with a required tooth shape in order to provide the pinion type cutter with an optimum relief surface. FIG. 1 is a perspective view showing the pinion type cutter, and FIG. 2 is a schematic diagram showing the internal gear, which is a resultant gear after cutting by the pinion type cutter, and the cutting edge shape in three different axially perpendicular cross-sections of the pinion type cutter. In the pinion type cutter 1 of the present invention, each of the cutting edge shapes in the respective axially perpendicular cross-sections is one that can correctly cut an internal gear 2 with a required tooth shape, and such cutting edge profiles appear as relief surfaces after resharpening.

(Method of designing and manufacturing the cutting edge shape profile of a pinion type cutter)

Described below is a method for designing and manufacturing the cutting edge shape profile of a pinion type cutter for cutting an arbitrary tooth shape. First, a tooth shape of an internal gear, which is a resultant gear after cutting by the pinion type cutter, is obtained from a rack tooth shape. Designating a profile-expressing mediating variable as t, the rack tooth shape profile can be given by the following formula (tertiary equation of the Akima method).

$$X = G(t) = G$$
$$Y = H(t) = H$$
$$(1 \cdot 1)$$

If Eq. (1·1) is expressed in a coordinate system O-XY fixed to a linearly moving rack, the result is the following formula, in which $\phi$ is a rotational angle of the gear, and $rc$ is a radius of the pitch circle of the internal gear.

$$X_0 = X$$
$$Y_0 = Y + r_c \phi$$
$$(1 \cdot 2)$$

If Eq. (1·2) is expressed in a stationary coordinate system $o\text{-}x_0 y_0$ of the gear, the result is the following formula.

$$x_0 = X_0 + r_c$$
$$y_0 = Y_0$$
$$(1 \cdot 3)$$

If Eq. (1·1) is expressed in a coordinate system o-xy that is fixed to the rotating gear, the result is the following formula.

$$x = x_0 \cos\phi + y_0 \sin\phi$$
$$y = -x_0 \sin\phi + y_0 \cos\phi$$
$$(1 \cdot 4)$$

If Eqs. (1·1), (1·2), and (1·3) are substituted into (1·4), the result is the following formula.

$$x = ( G + r_c )\cos\phi + ( H + r_c \phi )\sin\phi$$
$$y = -( G + r_c )\sin\phi + ( H + r_c \phi )\cos\phi$$
$$(1 \cdot 4 - 1)$$

Eq. (1·4-1) expresses a group of curves related to t and $\phi$, so the envelope of this group is the tooth shape profile of the intended internal gear. The condition formula of the envelope is the following Jacobian matrix.

$$F_G(t,\phi) = \begin{vmatrix} \dfrac{\partial x}{\partial t} & \dfrac{\partial y}{\partial t} \\[2mm] \dfrac{\partial x}{\partial \phi} & \dfrac{\partial y}{\partial \phi} \end{vmatrix} = \frac{\partial x}{\partial t}\frac{\partial y}{\partial \phi} - \frac{\partial x}{\partial \phi}\frac{\partial y}{\partial t} = 0 \qquad (1 \cdot 5)$$

Calculating the Jacobian matrix for Eq. (1·4-1) gives the following formulae.

$$\frac{\partial x}{\partial t} = \dot{G}\cos\phi + \dot{H}\sin\phi$$

$$\frac{\partial y}{\partial t} = -\dot{G}\sin\phi + \dot{H}\cos\phi$$

$$\frac{\partial x}{\partial \phi} = -(G + r_c)\sin\phi + r_c\sin\phi + (H + r_c\phi)\cos\phi$$

$$\frac{\partial y}{\partial \phi} = -(G + r_c)\cos\phi + r_c\cos\phi - (H + r_c\phi)\sin\phi$$

$$(1 \cdot 5-1)$$

$$F_G(t,\phi) = G\dot{G} + H\dot{H} + r_c\dot{H}\phi = 0 \qquad (1 \cdot 5\text{-}2)$$

Furthermore, transforming Eq. (1·5-2) gives the following formula.

$$\phi = -\frac{G\dot{G} + H\dot{H}}{r_z\dot{H}} \qquad (1 \cdot 5\text{-}3)$$

Therefore, a computational formula for the intended tooth shape profile of a cylindrical internal spur gear is as follows.

$$\begin{aligned} x &= (G + r_c)\cos\phi + (H + r_c\phi)\sin\phi \\ y &= -(G + r_c)\sin\phi + (H + r_c\phi)\cos\phi \end{aligned} \qquad (1 \cdot 4-2)$$

$$\phi = -\frac{G\dot{G} + H\dot{H}}{r_c\dot{H}}$$

$$\dot{G} = \frac{\partial G}{\partial t}$$

$$\dot{H} = \frac{\partial H}{\partial t}$$

(Validity range limit of cylindrical internal spur gear)

There may be cases in which the tooth shape profile of the cylindrical internal spur gear is not valid. In such cases, a cusp is generated on the tooth shape profile. In view of the above, a method for searching out the cusp on the tooth shape profile of the cylindrical internal spur gear is considered. A cusp is a type of singular point of a function at which a slope of a tangent is undefined on the curve, so validity limits of the tooth shape profile of the cylindrical internal spur gear can be known by identifying the undefined position. From this result, the cylindrical internal spur gear in which interference does not occur can be designed.

In view of the above, Eq. (1·4-1) that expresses the tooth shape profile of the cylindrical internal spur gear leads to a formula for determining the validity range. Letting Eq. (1·4-1) be $x = x(t, \phi) = x(t)$, $y = y(t, \phi) = y(t)$, a formula for the tangent to the gear tooth shape profile of the cylindrical internal spur gear can be written in the following manner from Eqs. (1·4-1) and (1·5-2).

$$\frac{dy}{dx} = \frac{\frac{dy}{dt}}{\frac{dx}{dt}} = \frac{U_O}{V_G} \qquad (1\cdot6)$$

In the formula,

$$U_G = \frac{\partial y}{\partial t} + \frac{\partial y}{\partial \phi} \frac{d\phi}{dt}$$
$$V_G = \frac{\partial x}{\partial t} + \frac{\partial x}{\partial \phi} \frac{d\phi}{dt} \qquad (1 \cdot 7)$$

Now, the following formula is derived from the conditional formula $F_G(t,\theta) = 0$ of the envelope.

$$\frac{d\phi}{dt} = \frac{\frac{\partial F_G}{\partial t}}{\frac{\partial F_G}{\partial \phi}} \qquad (1\cdot8)$$

The following formula can be obtained from Eq. (1·5-2).

$$\frac{\partial F_G}{\partial t} = \dot{G}^2 + \dot{H}^2 + G\ddot{G} + H\ddot{H} + r_c \ddot{H}\phi$$
$$\frac{\partial F_G}{\partial \phi} = r_c \dot{H} \qquad (1 \cdot 9)$$

In view of the above, a position at which $U_G = 0$ and $V_G = 0$ at the same time may be read if the computational result of Eqs. (1·8) and (1·9) for each of the obtained coordinates are substituted into Eq. (1·7), and $U_G$ and $V_G$ are obtained and arranged in accordance with coordinate numbers of these points. The point at which the two are zero at the same time is the undefined point, and its presence shows that there is a point in which the tooth shape profile of the cylindrical internal spur gear is invalid. In other words, Eq. (1·7) for deriving $U_G$ and $V_G$ is the formula for determining the validity limits of the tooth shape profile of the cylindrical internal spur gear.

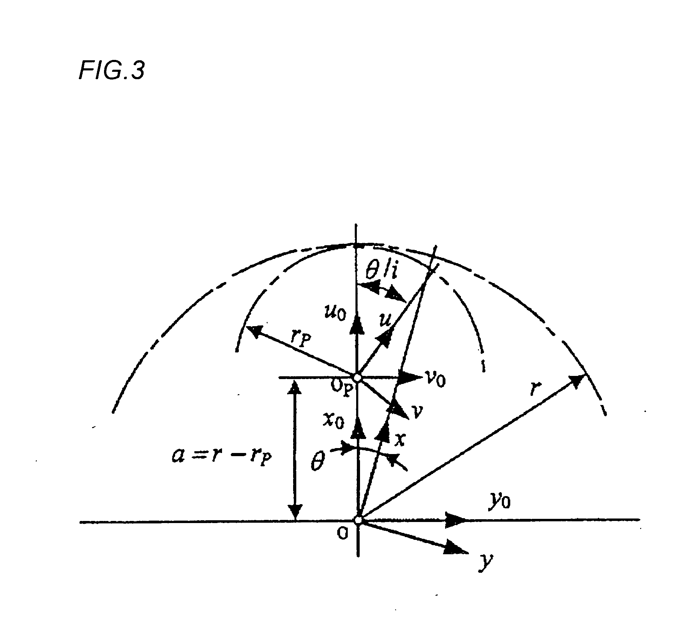

Next, the cutting edge shape of the pinion type cutter is derived based on the internal gear tooth profile. Here, the profile contour of the internal gear tooth profile is given with a series of dispersive points. Shown in FIG. 3 is a coordinate system for a theoretical analysis to determine the cutting edge shape of the pinion type cutter. This diagram shows a coordinate system when an internal gear with a number of teeth z is cut with the pinion type cutter that has a number of teeth zp. A coordinate system o-xy is fixed to the internal gear and rotates at an angle θ. A coordinate system $o_P$-$u_0v_0$ is a stationary coordinate system on the pinion type cutter side, and a coordinate system $o_P$-uv is fixed to the pinion type cutter that rotates at an angle θ/$i$. A variable $i$ is the gear ratio ($i$ = $z_P$/z < 1.0). The series of tooth shape profile points in the axially perpendicular cross-section of a given internal gear is interpolated by the Akima method and is given by the following formula. In the formula, t is a profile-expressing variable.

$$x = P(t) = P$$
$$y = Q(t) = Q \qquad (1)$$

The following formula is obtained when this tooth shape profile is expressed in a coordinate system $o\text{-}x_0y_0$, then expressed in the coordinate system $o_P\text{-}u_0v_0$, and further expressed in the coordinate system $o_P\text{-}uv$ fixedly rotating with the pinion type cutter.

$$\left.\begin{array}{l} u = P\cos\left(\dfrac{1-i}{i}\theta\right)+Q\sin\left(\dfrac{1-i}{i}\theta\right)-a\cos\left(\dfrac{\theta}{i}\right) \\[3mm] v = -P\sin\left(\dfrac{1-i}{i}\theta\right)+Q\cos\left(\dfrac{1-i}{i}\theta\right)+a\sin\left(\dfrac{\theta}{i}\right) \end{array}\right\} \quad (2)$$

Here, $a = r - r_P$ is the center distance between the internal gear and the pinion type cutter, r is the radius of a tooth cutting pitch circle of the internal gear, and $r_P$ is the radius of a tooth cutting pitch circle of the pinion type cutter. Eq. (2) expresses a group of curves for which $t$ and $\theta$ are variables, and the envelope of this group of curves is the required cutting edge shape profile of the pinion type cutter. A conditional formula for the envelope can be derived by computing the following Jacobian matrix for Eq. (2).

$$F_P(t,\theta)=\begin{vmatrix} \dfrac{\partial u}{\partial t} & \dfrac{\partial v}{\partial t} \\[3mm] \dfrac{\partial u}{\partial \theta} & \dfrac{\partial v}{\partial \theta} \end{vmatrix}=\frac{\partial u}{\partial t}\frac{\partial v}{\partial \theta}-\frac{\partial u}{\partial \theta}\frac{\partial v}{\partial t}=0 \qquad (3)$$

The following formula is derived from the above Eq.

$$\left.\begin{array}{l} \theta = \sin^{-1}\dfrac{-AC \pm B\sqrt{A^2+B^2-C^2}}{A^2+B^2} \\[4mm] \text{where}\quad A = -\dfrac{a}{i}\dot{Q}, \quad B = \dfrac{a}{i}\dot{P}, \quad C = -\dfrac{1-i}{i}\left(P\dot{P}+Q\dot{Q}\right) \\[4mm] \dot{P}=\dfrac{dP}{dt}, \dot{Q}=\dfrac{dQ}{dt} \end{array}\right\} \quad (4)$$

(Method of preventing interference)

Similar to the description given above regarding the validity limits of the tooth shape profile of the internal gear, the cutting edge shape profile of the pinion type cutter calculated using the aforementioned theoretical formulae may have a cusp (singular point in which a tangent slope is undefined) and interference phenomenon may occur, in this case the cutting edge shape profile of the pinion type cutter is not valid. In view of this, the following formulae can be derived from Eqs. (2) and (4) in order to verify the presence of the cusp.

$$\frac{dv}{du}=\frac{\dfrac{dv}{dt}}{\dfrac{du}{dt}}=\frac{V_P}{U_P} \qquad (5)$$

where

$$U_p = \frac{\partial u}{\partial t} + \frac{\partial u}{\partial \theta}\frac{d\theta}{dt} \quad , \quad V_p = \frac{\partial v}{\partial t} + \frac{\partial v}{\partial \theta}\frac{d\theta}{dt}$$

$$\frac{d\theta}{dt} = \dot{\theta} = -\frac{\dot{A}\sin\theta + \dot{B}\cos\theta + \dot{C}}{A\cos\theta - B\sin\theta}$$

$$\dot{A} = -\frac{a}{i}\ddot{Q}, \quad \dot{B} = \frac{a}{i}\ddot{P}, \quad \dot{C} = -\frac{1-i}{i}\left( P\ddot{P} + Q\ddot{Q} + \dot{P}^2 + \dot{Q}^2 \right) \qquad (6)$$

The slope of the tangent on the cutting edge shape profile is undefined, when the denominator and numerator of Eq. (5) simultaneously satisfy the conditions $U_P = 0$ and $V_P = 0$, respectively.

(Method for designing and manufacturing a grinding wheel profile for relief machining)

Next, the method for designing the profile of a grinding wheel for the relief machining of the pinion type cutter defined in the above manner is described. The method is fundamentally the same as the method for designing the profile of a pinion type cutter.

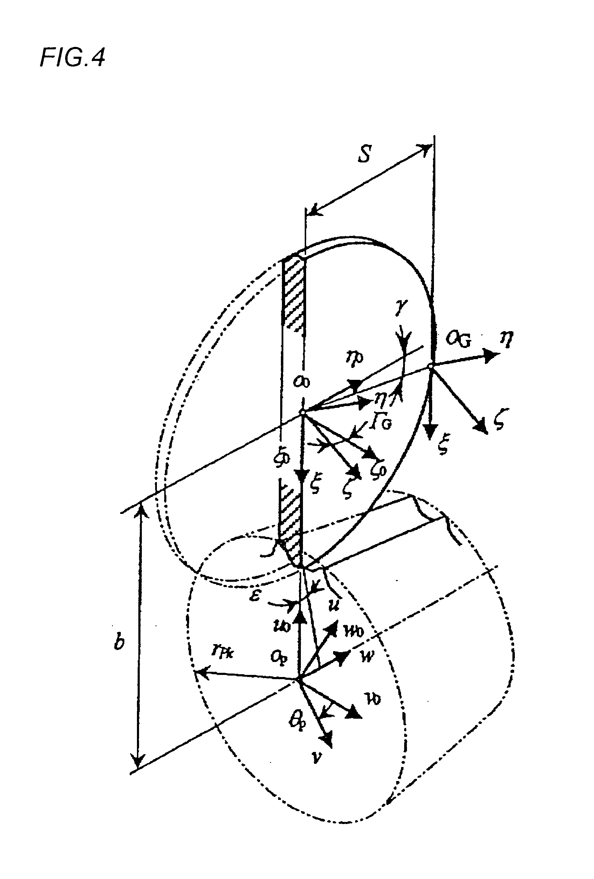

First considered are a coordinate system $o_P$-uvw' of a pinion type cutter rotating around an axis w, a stationary coordinate system $o_0$-$\xi_0\eta_0\zeta_0$ on the relief grinding wheel side, and a coordinate system $o_G$-$\xi\eta\zeta$ that is fixed to the relief grinding wheel in which an axis $\zeta_0$ and a grinding wheel axis $\zeta$ form a setting angle $\Gamma_G$, as shown in FIG. 4. In relief grinding, the grinding wheel moves diagonally by an amount equal to stan $\gamma$ in a positive direction of an axis $\xi_0$ while moving in the form of an "s" in a positive direction of an axis $\eta_0$ along a radial relief angle $\gamma$ of the pinion type cutter as the pinion type cutter rotates by an angle of $\theta_P$. A right-side relief surface has a right hand helix and a left-side relief surface has a left hand helix, both presenting tapered helical surfaces in the cutting edge shape formed in this manner. The following formula is valid if the right-side relief surface is considered in terms of a cylindrical reference for the outside radius $r_{Pk}$ of the pinion type cutter, $v_k$ is half the groove width in the outside diameter, and $\beta$ is the helix angle in the outside diameter.

$$\tan\beta = \frac{v_k \tan\gamma}{r_{Pk}}, \qquad s = \frac{r_{Pk}\theta_P}{\tan\beta} \qquad (7)$$

Here, the cutting edge shape profile of the pinion type cutter obtained in Eqs. (2) and (4) is given as $u = p(t)$ and $v = q(t)$, where $t$ again serves as a variable, and the result is interpolated by the Akima method and used. When projected onto a conical surface with a rake angle $\varepsilon$, this cutting edge shape profile can be expressed by the following formula.

$$u = p$$
$$v = q$$
$$w = (r_{Pk} - \sqrt{p^2 + q^2})\tan\varepsilon \qquad (8)$$

The following formula is obtained when this profile is expressed in the fixed coordinate system $o_G$-$\xi\eta\zeta$ on the grinding wheel side in relief motion.

$$\left.\begin{array}{l} \xi = b - q\sin\theta_P - p\cos\theta_P - s\tan\gamma \\ \eta = (q\cos\theta_P - p\sin\theta_P)\sin\Gamma_G \\ \quad \div\left\{\left(r_{Pk} - \sqrt{p^2+q^2}\right)\tan\varepsilon - s\right\}\cos\Gamma_G \\ \zeta = (q\cos\theta_P - p\sin\theta_P)\cos\Gamma_G \\ \quad -\left\{\left(r_{Pk} - \sqrt{p^2+q^2}\right)\tan\varepsilon - s\right\}\sin\Gamma_G \end{array}\right\} \qquad (9)$$

Therefore, designating an arbitrary radius of the relief grinding wheel as ρ, it is possible to express an axially cross-sectional cutting edge shape profile of the grinding wheel by the following formula.

$$\left.\begin{array}{l} \rho = \sqrt{\xi^2+\eta^2} \\ \zeta = (q\cos\theta_P - p\sin\theta_P)\cos\Gamma_G \\ \quad -\left\{\left(r_{Pk} - \sqrt{p^2+q^2}\right)\tan\varepsilon - s\right\}\sin\Gamma_G \end{array}\right\} \qquad (10)$$

Eq. (10) expresses a group of curves in which $t$ and $\theta_P$ are variables, and the cutting edge shape profile of the relief grinding wheel in axial cross section is can be obtained as the envelope of this group of curves. The following Jacobian matrix can be computed for Eq. (10) to determine a conditional formula for the envelope.

$$F_G(t,\theta_P) = \begin{vmatrix} \dfrac{\partial\rho}{\partial t} & \dfrac{\partial\zeta}{\partial t} \\[2mm] \dfrac{\partial\rho}{\partial\theta_P} & \dfrac{\partial\zeta}{\partial\theta_P} \end{vmatrix} = \dfrac{\partial\rho}{\partial t}\dfrac{\partial\zeta}{\partial\theta_P} - \dfrac{\partial\rho}{\partial\theta_P}\dfrac{\partial\zeta}{\partial t} = 0 \qquad (11)$$

(Example)

A design and trial manufacture experiment was conducted in accordance with the specifications for the internal gear, pinion type cutter, and relief grinding wheel shown in Table. 1. In this case, the radii of the tooth cutting pitch circles of the internal gear and pinion type cutter were set to values that were less than r = 63.842 mm and $r_P$ = 42.562 mm, or to values that were greater than r = 65.039 mm and $r_P$ = 43.360 mm, and when the cutting edge shape profile of the pinion type cutter was computed with Eqs. (2) and (4), folding interference occurred due to a cusp among profile points j = 55 to 61, and it was impossible to design the cutting edge shape for the pinion type cutter. Occurrence of this interference phenomenon was also confirmed by Eqs. (5) and (6). In view of this, a trial manufacture was attempted so that the values of the radii of the tooth cutting pitch circles of the internal gear and the pinion type cutter were adopted as the intermediate values of the upper and lower limits described above, the radii were set to r = 64.458 mm and $r_P$ = 42.972 mm, and the cutting edge shape profile for the pinion type cutter was established.

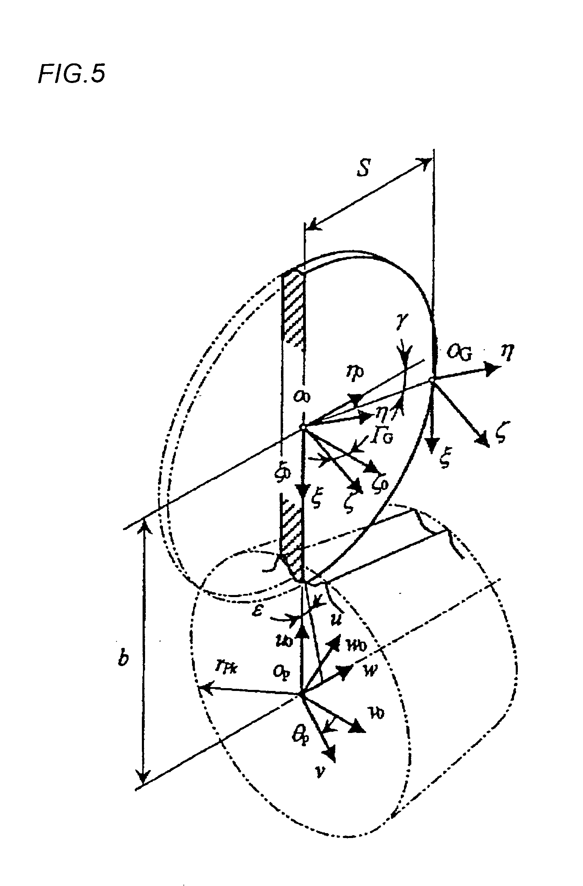

Next, this cutting edge shape profile of the pinion type cutter was adopted and interpolated using the Akima method to determine the profile of the relief grinding wheel by using Eqs. (9), (10), and (11). Some of the results are shown in FIG. 5. A relief cutting experiment was conducted for the pinion type cutter, a grinding wheel with this profile was manufactured on a trial basis, and it was confirmed that a high-precision pinion type cutter could be obtained.

[TABLE 1]

| Items | | Data |
|---|---|---|
| Diametral pitch | *DP* l/inch | 32.000 |

EP 1 504 838 A1

[TABLE 1]   (continued)

| Items | | Data |
|---|---|---|
| Internal gear: | | |
|     Number of profile points | $j$ | 1~140 |
|     Number of teeth | $z$ | 162 |
|     Pitch circle diameter | $d_c$ mm | 128.916 |
|     Addendum circle diameter | $d_k$ mm | 127.278 |
|     Dedendum circle diameter | $d_b$ mm | 129.852 |
| Pinion cutter: | | |
|     Number of teeth | $z_p$ | 108 |
|     Pitch circle diameter | $d_{pc}$ mm | 85.944 |
|     Major diameter | $d_{pk}$ mm | 86.880 |
|     Radial rake angle | $\delta$ deg | 5 |
|     Radial relief angle | $\gamma$ deg | 5 |
| Relief grinding wheel: | | |
|     Major diameter | $2_{pk}$ mm | 150 |
|     Setting angle | $\Gamma_G$ deg | 0.14583 |

The pinion type cutter of the present invention, in addition to being applicable to internal gears, may also be applied to the cutting of cylindrical gears, internal and external bevel gears, face gears, circular and non-circular gears of worm gears, and other gears.

The grinding wheel can be fed linearly, or the shafts of the grinding wheel and pinion type cutter can be fed in threadable fashion, when the relief surface is formed on the pinion type cutter.

**Claims**

1.  A pinion type cutter capable of cutting a gear that has a required tooth shape profile, comprising a cutting edge defined by a group of cutting edge shapes with different diameters that are arranged continuously or at a prescribed pitch in an axial direction.

2.  The pinion type cutter according to claim 1, wherein an external peripheral relief surface of the cutting edge is a conical surface or a surface of revolution.

3.  The pinion type cutter according to claim 2, wherein a lateral relief surface of the cutting edge is a tapered threaded surface.

4.  A method for designing a cutting edge shape profile for the pinion type cutter according to any of claims 1 to 3, including steps of:

    giving an axially perpendicular tooth shape profile contour for an internal gear as a series of dispersive points in a coordinate system when cutting to obtain the internal gear having a number of teeth z, with a pinion type cutter that has a number of teeth zp,

    interpolating given series of axially perpendicular cross-sectional tooth shape profile points for the internal gear by the Akima method,

    defining the axially perpendicular cross-sectional tooth shape profile for the internal gear by the following formula, with t as a variable expressing the profile,

$$x = P(t) = P \\ y = Q(t) = Q \ \Bigg\}$$

defining the axially perpendicular cross-sectional tooth shape profile with the following formula whereby the coordinate system has been transformed to a fixed coordinate system that fixedly rotates with the pinion type cutter,

$$u = P\cos\left(\frac{1-i}{i}\theta\right) + Q\sin\left(\frac{1-i}{i}\theta\right) - a\cos\left(\frac{\theta}{i}\right) \\ v = -P\sin\left(\frac{1-i}{i}\theta\right) + Q\cos\left(\frac{1-i}{i}\theta\right) + a\sin\left(\frac{\theta}{i}\right) \ \Bigg\}$$

where

$a = r - r_P$ (center distance between the internal gear and the pinion type cutter)
$r$: radius of a tooth cutting pitch circle of the internal gear
$r_p$: radius of a tooth cutting pitch circle of the pinion type cutter,

determining an envelope of a group of curves represented by the above formula with the aid of the following formula

$$\theta = \sin^{-1}\frac{-AC \pm B\sqrt{A^2 + B^2 - C^2}}{A^2 + B^2}$$

where

$$A = -\frac{a}{i}\dot{Q}, \ B = \frac{a}{i}\dot{P}, \ C = -\frac{1-i}{i}(P\dot{P} + Q\dot{Q})$$

$$\dot{P} = \frac{dP}{dt}, \dot{Q} = \frac{dQ}{dt}$$

, and

determining the axially perpendicular cross-sectional cutting edge shape profile of the pinion type cutter by projecting the envelope onto a cone of a rake surface of the pinion type cutter.

5. The method for designing the cutting edge shape profile for a pinion type cutter according to claim 4, wherein a determination is made using the following interference discriminant derived from the above formulae as to whether the cutting edge shape is invalid when the values $U_p$ and $V_p$ are both zero.

$$\frac{dv}{du} = \frac{\frac{dv}{dt}}{\frac{du}{dt}} = \frac{V_P}{U_P}$$

where

$$U_p = \frac{\partial u}{\partial t} + \frac{\partial u}{\partial \theta}\frac{d\theta}{dt}, \ V_P = \frac{\partial v}{\partial t} + \frac{\partial v}{\partial \theta}\frac{d\theta}{dt}$$

$$\frac{d\theta}{dt} = \dot{\theta} = -\frac{\dot{A}\sin\theta + \dot{B}\cos\theta + \dot{C}}{A\cos\theta - B\sin\theta}$$

$$\dot{A} = -\frac{a}{i}\ddot{Q}, \ \dot{B} = \frac{a}{i}\ddot{P}, \ \dot{C} = -\frac{1-i}{i}\left( P\ddot{P} + Q\ddot{Q} + \dot{P}^2 + \dot{Q}^2 \right)$$

6. The method for designing the cutting edge shape profile for a pinion type cutter according to claim 5, wherein a center distance $a$ between the pinion type cutter and the internal gear is varied;

a valid region for the cutting edge shapes in which the cutting edge shapes are not invalid is determined with the aid of the interference discriminant; and
the axially perpendicular cross-sectional cutting edge shape profiles obtained with the formula for expressing the envelope in the valid region of cutting edge shapes are superposed in the axial direction of the pinion type cutter.

FIG.1

FIG.2

EP 1 504 838 A1

FIG.3

15

FIG.4

FIG.5

**European Patent Office**

**EUROPEAN SEARCH REPORT**

Application Number

EP 04 01 7657

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2 801 459 A (KENDALL LLOYD F) 6 August 1957 (1957-08-06) * the whole document * ----- | 1-3 | B23F21/10 |
| X | US 4 139 327 A (KUEHL RONALD J) 13 February 1979 (1979-02-13) * the whole document * ----- | 1-3 | |
| X | DE 15 27 110 A (HURTH MASCH ZAHNRAD CARL) 4 September 1969 (1969-09-04) * figure 6 * ----- | 1-3 | |
| A | EP 0 037 909 A (MAAG ZAHNRAEDER & MASCHINEN AG) 21 October 1981 (1981-10-21) * the whole document * ----- | 1-6 | |
| A | US 3 720 989 A (RAMOND P) 20 March 1973 (1973-03-20) * abstract * ----- | 1-6 | |
| A | US 1 790 609 A (N.TRBOJEVICH) 27 January 1931 (1931-01-27) * figures * ----- | 1-6 | TECHNICAL FIELDS SEARCHED (Int.Cl.7) B23F |

The present search report has been drawn up for all claims

| Place of search | Date of completion of the search | Examiner |
|---|---|---|
| Munich | 9 December 2004 | Watson, S |

**ANNEX TO THE EUROPEAN SEARCH REPORT
ON EUROPEAN PATENT APPLICATION NO.**                    EP 04 01 7657

This annex lists the patent family members relating to the patent documents cited in  the above-mentioned European search report.
The members are as contained in the European Patent Office EDP file on
The European Patent Office is in no way liable for these particulars which are merely given for the purpose of information.

09-12-2004

| Patent document cited in search report | | Publication date | Patent family member(s) | | Publication date |
|---|---|---|---|---|---|
| US 2801459 | A | 06-08-1957 | NONE | | |
| US 4139327 | A | 13-02-1979 | BR | 7802876 A | 09-01-1979 |
| | | | DE | 2823833 A1 | 21-12-1978 |
| | | | GB | 1601268 A | 28-10-1981 |
| | | | JP | 54006196 A | 18-01-1979 |
| DE 1527110 | A | 04-09-1969 | DE | 1180223 B | 22-10-1964 |
| | | | DE | 1527110 A1 | 04-09-1969 |
| EP 0037909 | A | 21-10-1981 | CH | 647445 A5 | 31-01-1985 |
| | | | DE | 3047807 A1 | 29-10-1981 |
| | | | DE | 3167379 D1 | 10-01-1985 |
| | | | EP | 0037909 A2 | 21-10-1981 |
| | | | JP | 56157921 A | 05-12-1981 |
| US 3720989 | A | 20-03-1973 | US | 3842546 A | 22-10-1974 |
| US 1790609 | A | 27-01-1931 | NONE | | |

EPO FORM P0459

For more details about this annex : see Official Journal of the European Patent Office, No. 12/82